# EUROPÄISCHE PATENTSCHRIFT

(11) **EP 2 704 580 B1**
(45) Veröffentlichungstag und Bekanntmachung des Hinweises auf die Patenterteilung: **29.06.2016**
(21) Anmeldenummer: 12720135.8
(22) Anmeldetag: 27.04.2012
(51) Int. Cl.: B08B 7/00, B24C 1/00, A21B 3/16, A21B 5/02

(54) **VERFAHREN ZUR REINIGUNG VON BACKPLATTEN EINER BACKAUTOMATENANLAGE UND REINIGUNGSVORRICHTUNG**
METHOD FOR CLEANING BAKING PLATES OF AN AUTOMATIC BAKING SYSTEM AND CLEANING DEVICE
PROCÉDÉ DE NETTOYAGE DE PLAQUES DE CUISSON D'UNE INSTALLATION DE CUISSON AUTOMATISÉE ET DISPOSITIF DE NETTOYAGE

(30) Priorität: 02.05.2011 DE 102011050038
(43) Veröffentlichungstag der Anmeldung: 12.03.2014
(73) Patentinhaber: Rapido-Tech GmbH, 01445 Radebeul (DE)
(72) Erfinder: ENGELMANN, Michael, 65474 Bischofsheim (DE)
(74) Vertreter: Katscher Habermann Patentanwälte
(86) Internationale Anmeldenummer: PCT/EP2012/057834
(87) Internationale Veröffentlichungsnummer: WO 2012/150199

(56) Entgegenhaltungen:
- DE-A1- 2 030 230
- DE-U1- 20 308 788
- CRITCHLOW G W ET AL: "Hot and cold cleaning methods: CO2 and Nd:YAG laser ablation, sodium hydride immersion and CO2 cryoblasting", TRANSACTIONS OF THE INSTITUTE OF METAL FINISHING, MANEY PUBLISHING, BIRMINGHAM, GB, Bd. 87, Nr. 6, 1. November 2009 (2009-11-01), Seiten 284-286, XP001552113, ISSN: 0020-2967, DOI: 10.1179/174591909X12550821666472

## Beschreibung

Die Erfindung betrifft eine Reinigungsvorrichtung für Backplatten einer Backautomatenanlage, in der mehrere Backzangen mit jeweils zwei aufklappbaren Backplatten beabstandet voneinander an einer endlosen Backzangenkette festlegbar sind, die in einem Gehäuse der Backautomatenanlage umlaufend angeordnet ist.

Derartige Backautomatenanlagen, die beispielsweise zum automatisierten Backen von Waffeln oder anderen Gebäck-Formteilen verwendet werden, sind aus der Praxis in unterschiedlicher Ausgestaltung bekannt. Um einen kontinuierlichen Backbetrieb zu ermöglichen, wird üblicherweise eine Anzahl von Backzangen an einer endlosen Backzangenkette befestigt, die während des Betriebs kontinuierlich in der Backautomatenanlage umläuft. Jede Backzange trägt zwei Backplatten, die für eine Befüllung, beziehungsweise für einen Teigaufguss um eine gemeinsame Schwenkachse aufgeklappt und in einem wieder verschlossenen Zustand an der umlaufenden Backzangenkette durch eine Beheizungskammer befördert werden. Zum Entnehmen einer fertig gebackenen Waffel oder eines Gepäck-Formteils werden die Backplatten anschließend wieder geöffnet und nach der Entnahme der gebackenen Waffel oder des Gebäck-Formteils wieder einer Teigaufgussstation zugeführt. Der Bereich der Backautomatenanlage, in dem die Backzangen zur Entnahme der gebackenen Backwaren und zur neuen Befüllung mit Teig geöffnet und anschließend wieder geschlossen werden wird als Hauptprozesskammer bezeichnet. In dem anderen, oftmals erheblich längeren Abschnitt der Backzangenkette sind die Backzangen geschlossen. Üblicherweise sind zwischen 28 und 150 Backzangen an einer umlaufenden Backzangenkette befestigt.

Derartige Backautomatenanlagen werden regelmäßig im Schichtbetrieb oder im Dauerbetrieb eingesetzt, um möglichst lange Betriebszeiten und geringe Stillstandszeiten zu erreichen. In Abhängigkeit von dem verwendeten Teigmaterial und den jeweils vorgegebenen Backbedingungen lagern sich während des Backbetriebs zunehmend Teigrückstände an den Oberflächen der Backplatten ab, die mit dem Teig in Berührung kommen. Die Backplatten müssen deshalb in zeitlichen Abständen gereinigt werden.

Zum Reinigen der Backplatten wird in der Praxis die Backautomatenanlage angehalten, um die einzelnen Backplatten der Reihe nach manuell reinigen zu können. Die Reinigungsarbeiten sollten von ausgebildeten Fachkräften durchgeführt werden und dauern je nach Größe und Anzahl der einzelnen Backplatten bis zu mehrere Arbeitstage. In dieser Zeit kann die Backautomatenanlage nicht für den Backbetrieb verwendet werden. Die Reinigungsintervalle können zwischen zwei oder drei Wochen und bis zu einem Jahr betragen, wobei in der Regel mehrere vollständige Reinigungsvorgänge in einem Jahr durchgeführt werden müssen. Aufgrund der üblicherweise manuell durchgeführten Reinigungsarbeiten und der damit einhergehenden Stillstandszeiten ist die Reinigung der Backplatten aufwendig und kostenintensiv.

In DE 37 17 797 C2 wird eine Reinigungsvorrichtung für Backplatten beschrieben, die an einem Tragrahmen einer Backautomatenanlage stationär angeordnet und ein quer zur Laufrichtung der Backzangen bewegbares Gestell aufweist, an dem ein Reinigungskopf angeordnet ist. Die Reinigungsvorrichtung ist in einem von den Backzangen im aufgeklappten Zustand durchlaufenden Abschnitt der umlaufenden Backzangenkette stationär angeordnet. Mit einer derartigen Reinigungsvorrichtung können die einzelnen Backplatten, welche von der Backzangenkette an der Reinigungsvorrichtung vorbei transportiert werden, automatisiert gereinigt werden. Der konstruktive Aufwand für eine derartige Reinigungsvorrichtung ist groß. Zudem muss durch zusätzliche konstruktive Maßnahmen gewährleistet werden, dass die während der Reinigung der Backplatten entfernten, beziehungsweise von den Backplatten gelösten Teigreste nicht in angrenzende Bereiche und insbesondere nicht in den Hauptprozessbereich der Backautomatenanlage gelangen und diese verunreinigen können. Aus diesen Gründen ist eine Backautomatenanlage, die mit einer solchen Reinigungsvorrichtung ausgestattet ist, erheblich teurer als eine Backautomatenanlage ohne eine automatische Reinigungsvorrichtung. In den meisten Fällen wird deshalb auf eine zusätzliche Reinigungsvorrichtung verzichtet und die Reinigung der Backplatten manuell durchgeführt.

Das Dokument DE 198 30 397 A1 offenbart eine Vorrichtung und Verfahren zum Reinigen von Vulkanisierformen.

Es wird als Aufgabe der vorliegenden Erfindung angesehen, eine Reinigungsvorrichtung der eingangsgenannten Gattung so auszugestalten, dass die Reinigungsvorrichtung möglichst kostengünstig und effizient zur Reinigung von Backplatten einer Backautomatenanlage eingesetzt werden kann.

Diese Aufgabe wird erfindungsgemäß dadurch gelöst, dass die Reinigungsvorrichtung in einem während des Backbetriebs von den Backzangen im geschlossenen Zustand durchlaufenden Abschnitt der umlaufenden Backzangenkette an dem Gehäuse der Backautomatenanlage andockbar ausgestaltet ist und Mittel zur lösbaren Festlegung an dem Gehäuse der Backautomatenanlage aufweist, und dass die Reinigungsvorrichtung eine Öffnungseinrichtung zum Aufklappen einer Backzange aufweist, deren Backplatten gereinigt werden sollen. Die erfindungsgemäße Reinigungsvorrichtung kann bei Bedarf mit einer Backautomatenanlage verbunden und an diese angedockt werden, um in einem automatisierten Verfahren sukzessive alle Backplatten zu reinigen, die an der Reinigungsvorrichtung vorbei oder durch die Reinigungsvorrichtung hindurch transportiert werden. Nachdem alle Backplatten einer Backautomatenanlage gereinigt wurden, kann die Reinigungsvorrichtung wieder von der Backautomatenanlage gelöst und zur Reinigung der Backplatten einer weiteren Backautomatenanlage verwendet werden. Da eine derartige Reinigungsvorrichtung nicht nur mit einer einzigen Backautomatenanlage genutzt werden kann, sondern für die Reinigung von Backplatten mehrerer Backautomatenanlagen verwendet werden kann, amortisieren sich die Herstellungs-, beziehungsweise Beschaffungskosten der Reinigungsvorrichtung bereits nach kurzer Zeit.

Durch die Anordnung der Reinigungsvorrichtung in einem während des Backbetriebs von den Backzangen im geschlossenen Zustand durchlaufenden Abschnitt der umlaufenden Backzangenkette ist ein zusätzlicher Aufwand für das Öffnen der Backzangen vor dem Reinigungsvorgang und deren anschließendes Schließen erforderlich. Dieser zusätzliche Aufwand widerspricht zunächst dem üblichen Streben nach Weiterentwicklungen, die kostengünstiger sind und für deren Herstellung und Betrieb einen möglichst geringen Aufwand erfordern.

Allerdings ergeben sich auch mehrere Vorteile, die diesen Nachteil mehr als aufwiegen. Die Backzangen können zum Zwecke der Reinigung weiter geöffnet werden, als es während des Backbetriebs zum Auffüllen des Teiges und zum Entnehmen der gebackenen Backwaren erforderlich ist. Auf diese Weise können große Öffnungswinkel von 90° und mehr und dadurch bedingt eine gründliche und schnelle Reinigung der Backplatten ermöglicht werden. Während des Backbetriebs werden die Backzangen oftmals nur etwa zwischen 60° bis 75° geöffnet, so dass hinterschnittene Bereiche der oberflächenstrukturierten Backplatten nicht ausreichend und nicht in kurzer Zeit gereinigt werden können. Zudem ist es nicht erforderlich, den Hauptprozessraum, in dem Teig auf die Backplatten aufgegossen und die gebackenen Backwaren entnommen werden, während des Reinigungsvorgangs besonders zu schützen oder anschließend von Verunreinigungen zu reinigen, die beispielsweise als gelöste Teigreste oder Reinigungsmittelreste bei dem Reinigungsvorgang erzeugt wurden.

Die Reinigungsvorrichtung weist erfindungsgemäß eine Öffnungseinrichtung zum Aufklappen einer Backzange auf, deren Backplatten gereinigt werden sollen. Die Öffnungseinrichtung kann beispielsweise Anschlagflächen oder Hebel beinhalten, die eine mit der Backzangenkette vorbei transportierte Backzange während der Dauer des Reinigungsvorgangs entriegeln oder öffnen und die Backplatten aufklappen. Die Öffnungseinrichtung ist in Abhängigkeit von der Ausgestaltung der Backautomatenanlage und der gewünschten Anordnung der Reinigungsvorrichtung an der betreffenden Backautomatenanlage ausgestaltet und an die betreffende Backautomatenanlage angepasst. Die Öffnungseinrichtung kann derart ausgestaltet sein, dass die Öffnungseinrichtung gegebenenfalls mit geringfügigen Modifikationen für verschiedene Backautomatenanlagen bzw. für unterschiedliche Backzangen oder Backplatten verwendet werden kann.

In Verbindung mit einer geeigneten Steuer- oder Regelungseinrichtung kann eine teilweise oder vollständig automatisierte Prozesssteuerung des Reinigungsprozesses aller Backplatten ermöglicht werden. Nach dem Andocken der Reinigungsvorrichtung, die mit einer Öffnungseinrichtung ausgestattet oder die Steuerung einer bereits an der Backautomatenanlage befindlichen Öffnungseinrichtung übernehmen kann, können die einzelnen Backplatten sukzessive an die Reinigungsvorrichtung verfahren, von der Öffnungseinrichtung geöffnet, von der Reinigungseinrichtung gereinigt, geschlossen und wieder weitertransportiert werden, um die Reinigung der nächsten Backplatte zu ermöglichen.

Durch eine geeignete Ausgestaltung der Mittel zur lösbaren Festlegung sowie von gegebenenfalls an einer Backautomatenanlage anliegenden Bereiche der Reinigungsvorrichtung kann ermöglicht werden, dass die Reinigungsvorrichtung an verschiedenen Abschnitten der umlaufend angeordneten Backzangenkette positioniert und dort zur Reinigung der Backzangen verwendet werden kann. Auch kann in einfacher Weise gewährleistet werden, dass die Reinigungsvorrichtung an unterschiedlich ausgestaltete Backautomatenanlagen angedockt werden kann. Um die Verwendung der Reinigungsvorrichtung mit Backautomatenanlagen von verschiedenen Herstellern zu ermöglichen kann weiterhin vorgesehen sein, dass unterschiedliche Mittel zur lösbaren Festlegung der Reinigungsvorrichtung an den jeweiligen Gehäusen der verschiedenen Backautomatenanlagen vorhanden sind, oder dass die Reinigungsvorrichtung ein wechselbares Andockmodul aufweist, das an die jeweiligen Gegebenheiten der verschiedenen Backautomatenanlagen anpassbar ist.

Vorzugsweise ist vorgesehen, dass die Reinigungsvorrichtung in einem Bereich einer Umlenkung der Backzangenkette an einem Ende der Backautomatenanlage andockbar ist. Üblicherweise sind die einzelnen Backzangen und damit auch die Backplatten in dem Bereich der Umlenkung einfach zugänglich. In aller Regel befindet sich im Bereich der Umlenkung weder eine Teigaufgussstation noch eine Beheizungskammer, deren Konstruktion während der Reinigung der Backplatten oder ein Andocken der Reinigungsvorrichtung stören könnten. Zudem kann die Reinigungsvorrichtung beispielsweise verfahrbar ausgestaltet sein und in einem selbsttragenden Rahmengestell angeordnet sein, dass lediglich von einer Seite an die Backautomatenanlage herangefahren und an dem Gehäuse der Backautomatenanlage angedockt werden muss. Größere Umbauten an der Backautomatenanlage sind nicht erforderlich.

Um auch bei größeren Backplatten eine zuverlässige Reinigung der einzelnen Backplatten gewährleisten zu können ist vorgesehen, dass die Reinigungsvorrichtung einen Reinigungskopf aufweist, der relativ zu einer zu reinigenden Fläche einer Backplatte verlagerbar ist. Der Reinigungskopf kann beispielsweise eine Düse aufweisen, aus der ein druckbeaufschlagter Flüssigkeitsstrahl eines flüssigen Reinigungsmittels austritt. Der Flüssigkeitsstrahl kann mit Hilfe des verlagerbaren Reinigungskopfes über die gesamte zu reinigende Fläche der Backplatte geführt werden.

Durch die Verwendung eines relativ zu der zu reinigenden Fläche der Backplatte verlagerbaren Reinigungskopfs kann zu dem erreicht werden, dass auch vorspringende und zurückgesetzte Bereiche einer dreidimensional strukturierten Oberfläche einer Backplatte zuverlässig von Teigresten gesäubert werden kann.

Gemäß einer vorteilhaften Ausgestaltung des Erfindungsgedankens ist vorgesehen, dass die Reinigungsvorrichtung eine Lasereinrichtung aufweist. Untersuchungen haben ergeben, dass mit Hilfe eines auf die zu reinigende Fläche einer Backplatte gerichteten Laserstrahls die an einer Backplatte anhaftenden Teigrückstände rasch und zuverlässig abgelöst werden können. Geeignete Lasereinrichtungen weisen beispielsweise einen CO₂-Laser, einen Nd-Yag-Laser oder einen Faserlaser mit einer ausreichend hohen Ausgangsleistung auf.Durch eine geeignete Vorgabe von beispielsweise der Wellenlänge und einer Pulsfrequenz des von der Lasereinrichtung erzeugten Laserstrahls kann erreicht werden, dass auf der Oberfläche der Backplatten anhaftende organische Rückstände entfernt werden können, ohne dass die metallischen Oberflächen der Backplatten verändert oder beschädigt werden. Es hat sich gezeigt, dass mit geeigneten Lasereinrichtungen in Abhängigkeit von dem Verschmutzungsgrad eine Fläche von mehr als 0,1 m² pro Minute vollständig und zuverlässig von anhaftenden Teigresten gereinigt werden kann.

Die Reinigung der Backplatten mit einem Laserstrahl ermöglicht einen raschen, zuverlässigen und gegebenenfalls nahezu rückstandsfreien Reinigungsvorgang, der die Gefahr einer Kontamination benachbarter Bereiche der Backautomatenanlage minimiert. Es muss kein flüssiges oder festes Reinigungsmittel eingesetzt werden, dass wieder aufgefangen oder gesammelt und entsorgt werden muss.

Einer Ausgestaltung des Erfindungsgedankens zur Folge ist ebenfalls denkbar, dass die Reinigungsvorrichtung eine Trockeneisstrahlreinigungseinrichtung oder eine Trockenschneereinigungseinrichtung aufweist. Eine Trockeneisstrahlreinigungseinrichtung oder eine Trockenschneereinigungseinrichtung kann als handelsübliche und in der Praxis bewährte Komponente entweder zusätzlich zu einer Lasereinrichtung oder anstelle der Lasereinrichtung in die Reinigungsvorrichtung integriert werden.

Es ist ebenfalls denkbar, dass die Reinigungsvorrichtung auch weitere Reinigungskomponenten oder Reinigungseinrichtungen aufweist, die ausschließlich oder ergänzend zu einer Laserreinigung oder einer Trockeneisstrahlreinigung Anwendung finden können.

Vorzugsweise ist vorgesehen, dass die Reinigungsvorrichtung ein Abschirmgehäuse aufweist. Durch das Abschirmgehäuse kann beispielsweise verhindert werden, dass ein hochenergetischer und für Menschen gefährlicher Laserstrahl unabsichtlich aus der Reinigungsvorrichtung austritt und eventuell in der Umgebung der Reinigungsvorrichtung befindliche Lebewesen verletzt. Falls die Reinigungsvorrichtung mit einem Reinigungsmittel wie beispielsweise Trockeneis oder einem flüssigen Reinigungsmittel betrieben wird, kann durch das Abschirmgehäuse gewährleistet werden, dass das Reinigungsmittel sowie die während der Reinigung von den Backplatten gelösten Verunreinigungen aufgefangen und gesammelt werden, um einer Entsorgung zugeführt werden zu können.

Die Erfindung betrifft auch ein Verfahren zur Reinigung von Backplatten einer Backautomatenanlage, in der mehrere Backzangen mit zwei aufklappbaren Backplatten beabstandet voneinander an einer umlaufenden Backzangenkette festgelegt sind, die in einem Gehäuse umlaufend angeordnet ist, und dass die Reinigungsvorrichtung eine Öffnungseinrichtung zum Aufklappen einer Backzange aufweist, mit deren Hilfe die einzelnen Backzangen automatisiert vor dem Reinigungsvorgang geöffnet und anschließend wieder geschlossen werden.

Das erfindungsgemäße Verfahren ist dadurch gekennzeichnet, dass eine Reinigungsvorrichtung in einem während des Backbetriebs von den Backzangen im geschlossenen Zustand durchlaufenden Abschnitt der umlaufenden Backzangenkette an dem Gehäuse der Backautomatenanlage mit Hilfe von Mitteln zur lösbaren Festlegung an dem Gehäuse der Backautomatenanlage angedockt wird und sukzessive die einzelnen Backzangen der Reinigungsvorrichtung zugeführt, mit einer an oder in der Reinigungsvorrichtung angeordneten Öffnungseinrichtung geöffnet, gereinigt und anschließend mit der Öffnungseinrichtung wieder geschlossen werden.

Erfindungsgemäß ist demzufolge vorgesehen, dass die Reinigungsvorrichtung außerhalb der Hauptprozesskammer angedockt wird, in der die Backzangen zwar durch die Backautomatenanlage geöffnet und geschlossen werden, eine Verunreinigung der Hauptprozesskammer durch den Reinigungsvorgang der Backzangen jedoch kaum vermieden werden kann. Um in einem anderen Abschnitt der Backzangenkette außerhalb der Hauptprozesskammer die Backzangen reinigen zu können ist eine gesonderte Öffnungseinrichtung zum Aufklappen einer Backzange vorgesehen. Mit Hilfe der Öffnungseinrichtung können die einzelnen Backzangen automatisiert vor dem Reinigungsvorgang geöffnet und anschließend wieder geschlossen werden. Die Reinigung aller Backzangen der Backautomatenanlage kann demzufolge vollständig automatisiert und ohne einen manuellen Eingriff durchgeführt werden.

In vorteilhafter Weise ist vorgesehen, dass die Reinigungsvorrichtung in einem Bereich einer Umlenkung der Backzangenkette an einem Ende der Backautomatenanlage angedockt wird. Dieser Bereich ist oftmals leicht zugänglich und bei verschiedenen Modellen der Backautomatenanlagen ähnlich ausgestaltet, so dass lediglich geringe Modifikationen und Anpassungen der Reinigungsanlage zum Andocken an die Backautomatenanlage in diesem Bereich erforderlich sind.

Um eine rasche und intensive Reinigung zu ermöglichen ist vorgesehen, dass die Reinigungsvorrichtung einen Reinigungskopf aufweist, der während des Reinigungsvorgangs relativ zu einer zu reinigenden Fläche einer Backplatte verlagert wird.

Die zu reinigenden Flächen der Backplatten können mit einem darauf gerichteten und die Flächen überstreichenden Laserstrahl gereinigt werden. Die zu reinigenden Flächen der Backplatten können auch mit einem darauf gerichteten und die Flächen überstreichenden Trockeneisstrahl gereinigt werden.

Nachfolgend wird ein Ausführungsbeispiel des Erfindungsgedankens näher erläutert, das in der Zeichnung exemplarisch dargestellt ist. Es zeigt:
Figur 1 eine schematische Darstellung einer Reinigungsvorrichtung, und
Figur 2 eine schematische Darstellung eines Endbereichs einer Backautomatenanlage, an dem die in Figur 1 abgebildete Reinigungsvorrichtung angedockt ist.

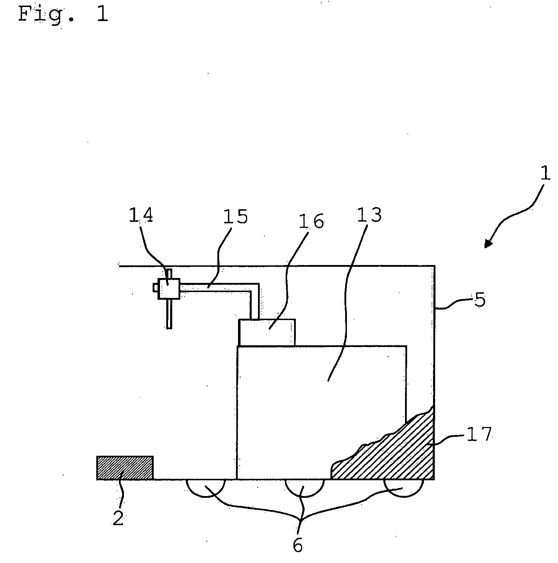

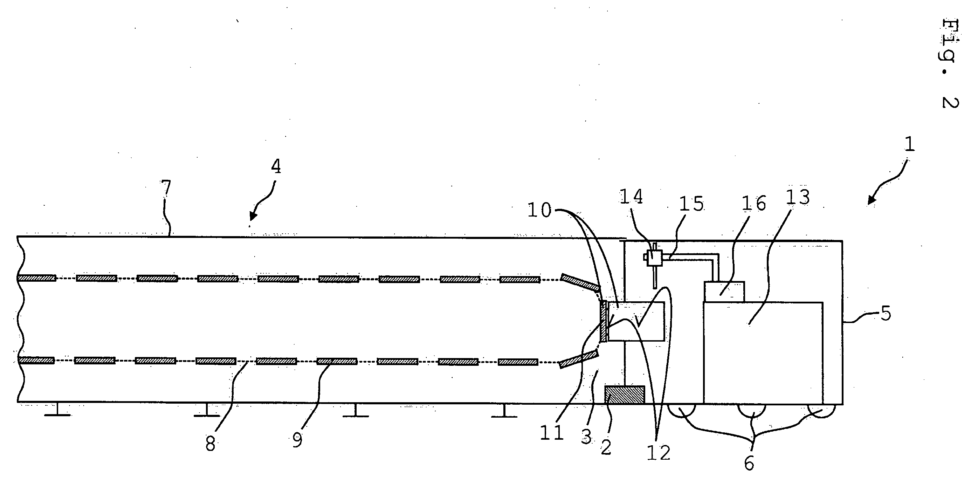

In Figur 1 ist schematisch eine Reinigungsvorrichtung 1 dargestellt. Die Reinigungsvorrichtung 1 weist ein im Bodenbereich angeordnetes Andockmodul 2 auf. Mit dem Andockmodul 2, das nicht näher abgebildete Befestigungsmittel aufweist, kann die Reinigungsvorrichtung 1 an einem Endbereich 3 einer Backautomatenanlage 4 angedockt und lösbar festgelegt werden, wie es in Fig. 2 gezeigt ist.

Die Reinigungsvorrichtung 1 weist ein Rahmengestell 5 mit mehreren schwenkbar gelagerten Rädern 6 auf. Die Reinigungsvorrichtung 1 kann auf den Rädern 6 verfahren und an beliebige Backautomatenanlagen 4 herangefahren und angedockt werden. Durch das Andocken der Reinigungsvorrichtung 1 an der Backautomatenanlage 4 wird die Position und Ausrichtung der Reinigungsanlage 1 relativ zu der Backautomatenanlage 4 vorgegeben und fixiert.

Die Backautomatenanlage 4 weist innerhalb eines Backautomatengehäuses 7 eine endlose Backzangenkette 8 auf, an der in regelmäßigen Abständen Backzangen 9 angeordnet sind. Die Backzangenkette 8 wird in dem Endbereich 3 der Backautomatenanlage 4 umgelenkt. Jede Backzange 9 weist zwei schwenkbar um eine gemeinsame Schwenkachse gelagerte Backplatten 10 auf, die in einem geschlossenen Zustand eine Backform bilden. Eine zu reinigende Backzange 11 wird mit Hilfe einer nicht näher dargestellten Öffnungseinrichtung der Reinigungsvorrichtung 1 in dem Endbereich 3 der Backautomatenanlage 4 geöffnet, an dem die Reinigungsvorrichtung 1 angedockt ist. Die beiden einander zugewandten Oberflächen 12 der geöffneten Backplatten 10 der geöffneten Backzange 11 können mit Hilfe der angedockten Reinigungsvorrichtung 1 gereinigt werden. Im Anschluss daran wird die gereinigte Backzange 11 durch die Öffnungseinrichtung wieder geschlossen und durch eine Betätigung der Backzangenkette 8 die nächste zu reinigende Backzange 11 zur Reinigungsvorrichtung 1 transportiert.

Um die geöffneten Backplatten 10 zu reinigen weist die Reinigungsvorrichtung 1 eine Lasereinrichtung 13 auf, mit der ein Laserstrahl erzeugt werden kann, der aus einem Laserreinigungskopf 14 austritt. Der Laserreinigungskopf 14 ist an einem verfahrbaren Tragarm 15 schwenkbar gelagert, so dass der Laserreinigungskopf 14 in allen Raumrichtungen verfahrbar und relativ zu den zu reinigenden Oberflächen 12 der geöffneten Backplatte 10 beliebig angeordnet und ausgerichtet werden kann. Mit einem Steuerungsmodul 16 kann die Anordnung und Ausrichtung des Laserreinigungskopfs 14 vorgegeben und verändert werden.

Um die Oberflächen 12 der geöffneten Backplatte 10 zu reinigen muss der mit der Lasereinrichtung 13 erzeugte Laserstrahl beispielsweise mäanderförmig über die Oberflächen 12 geführt werden. Je nach verwendeter Wellenlänge und Energiedichte des Laserstrahls können entweder die an der Oberfläche 12 anhaftenden Teigreste verbrannt werden oder die Oberfläche 12 in einem Bereich um den auftreffenden Laserstrahl lokal derart erhitzt werden, dass die daran anhaftenden Teigreste abplatzen und sich von selbst lösen oder beispielsweise mit Unterstützung durch Druckluft etc. von der zu reinigenden Oberfläche 12 gelöst werden können.

Durch die Verwendung geeigneter Lasereinrichtungen 13 sowie einer geeigneten Steuerung des verfahrbaren Laserreinigungskopfs 14 kann eine Fläche von mehr als 0,1 m² je Minute gereinigt werden, wobei auch profilierte Oberflächen 12 rückstandsfrei gereinigt werden können. Die Reinigungswirkung kann dadurch verbessert werden, dass der Laserreinigungskopf 14 in einem möglichst gleichbleibenden Abstand über die zu reinigenden Oberflächen 12 geführt wird.

Um einen unkontrollierten Austritt des Laserstrahls während eines Reinigungsvorgangs zuverlässig vermeiden zu können weist die Reinigungsvorrichtung 1 ein die Lasereinrichtung 13 und den Laserreinigungskopf 14 umgebendes Gehäuse 17 auf. Das Gehäuse 17 kann beispielsweise geeignete Dichtungslippen oder einen Überlappungsbereich mit dem angrenzenden Endbereich 3 des Backautomatengehäuses 7 aufweisen, um Spalten oder Fugen zu verhindern, aus denen ein gegebenenfalls an einer Oberfläche 12 reflektierter Laserstrahl austreten könnte.

Die zu reinigende Backzange 11 wird vollautomatisch mit einer in den Figuren nicht näher dargestellten Öffnungseinrichtung zu Reinigungszwecken geöffnet und nach der Reinigung der Backplatten 10 durch die Öffnungseinrichtung wieder geschlossen. Die Öffnungseinrichtung ist in oder an der Reinigungsvorrichtung 1 angeordnet. In Verbindung mit einer geeigneten Steuer- oder Regeleinrichtung kann eine vollständig automatisierte Prozesssteuerung des Reinigungsprozesses aller Oberflächen 12 der Backplatten 10 der Backautomatenanlage 4 erreicht werden.

Zudem kann die Reinigungsvorrichtung 1 eine Sammeleinrichtung für Teigreste bzw. Verunreinigungen aufweisen, die während des Reinigungsvorgangs von den Oberflächen 12 der gereinigten Backzange 11 bzw. aller Backzangen 9 gelöst wurden.

## Patentansprüche

1. Reinigungsvorrichtung (1) für Backplatten (10) einer Backautomatenanlage (4), in der mehrere Backzangen (9, 11) mit zwei aufklappbaren Backplatten (10) beabstandet voneinander an einer umlaufenden Backzangenkette (8) festlegbar sind, die in einem Gehäuse (12) umlaufend angeordnet ist, **dadurch gekennzeichnet, dass** die Reinigungsvorrichtung (1) in einem während des Backbetriebs von den Backzangen (9, 11) im geschlossenen Zustand durchlaufenden Abschnitt der umlaufenden Backzangenkette (8) an dem Gehäuse (12) der Backautomatenanlage (4) andockbar ausgestaltet ist und Mittel zur lösbaren Festlegung an dem Gehäuse (7) der Backautomatenanlage (4) aufweist, und dass die Reinigungsvorrichtung (1) eine Öffnungseinrichtung zum Aufklappen einer Backzange (9, 11) aufweist.

2. Reinigungsvorrichtung (1) nach Anspruch 1, **dadurch gekennzeichnet, dass** die Reinigungsvorrichtung (1) in einem Bereich einer Umlenkung der Backzangenkette (8) an einem Ende (3) der Backautomatenanlage (4) andockbar ist.

3. Reinigungsvorrichtung (1) nach Anspruch 1 oder Anspruch 2, **dadurch gekennzeichnet, dass** die Reinigungsvorrichtung (1) einen Reinigungskopf (14) aufweist, der relativ zu einer zu reinigenden Fläche (12) einer Backplatte (10) verlagerbar ist.

4. Reinigungsvorrichtung (1) nach einem der vorangehenden Ansprüche, **dadurch gekennzeichnet, dass** die Reinigungsvorrichtung (1) eine Lasereinrichtung (13) aufweist.

5. Reinigungsvorrichtung (1) nach einem der vorangehenden Ansprüche, **dadurch gekennzeichnet, dass** die Reinigungsvorrichtung (1) eine Trockeneisstrahlreinigungseinrichtung aufweist.

6. Reinigungsvorrichtung (1) nach einem der vorangehenden Ansprüche, **dadurch gekennzeichnet, dass** die Reinigungsvorrichtung (1) ein Abschirmgehäuse (17) aufweist.

7. Verfahren zur Reinigung von Backplatten (10) einer Backautomatenanlage (4), in der mehrere Backzangen (9, 11) mit zwei aufklappbaren Backplatten (10) beabstandet voneinander an einer umlaufenden Backzangenkette (8) festlegbar sind, die in einem Gehäuse (12) umlaufend angeordnet ist, **dadurch gekennzeichnet, dass** eine Reinigungsvorrichtung (1) in einem während des Backbetriebs von den Backzangen (9, 11) im geschlossenen Zustand durchlaufenden Abschnitt der umlaufenden Backzangenkette (8) an dem Gehäuse (12) der Backautomatenanlage (4) mit Hilfe von Mitteln zur lösbaren Festlegung an dem Gehäuse (7) der Backautomatenanlage (4) angedockt wird, und dass die einzelnen Backzangen (9, 11) nacheinander der Reinigungsvorrichtung (1) zugeführt, mit einer an oder in der Reinigungsvorrichtung (1) angeordneten Öffnungseinrichtung geöffnet, gereinigt und anschließend mit der Öffnungseinrichtung wieder geschlossen werden.

8. Verfahren zur Reinigung nach Anspruch 7, **dadurch gekennzeichnet, dass** die Reinigungsvorrichtung (1) in einem Bereich einer Umlenkung der Backzangenkette (8) an einem Ende (3) der Backautomatenanlage (4) angedockt wird.

9. Verfahren zur Reinigung nach einem der vorangehenden Ansprüche 7 oder 8, **dadurch gekennzeichnet, dass** die Reinigungsvorrichtung (1) einen Reinigungskopf (14) aufweist, der während des Reinigungsvorgangs relativ zu einer zu reinigenden Fläche (12) einer Backplatte (10) verlagert wird.

10. Verfahren zur Reinigung nach einem der vorangehenden Ansprüche 7 bis 9, **dadurch gekennzeichnet, dass** die Reinigungsvorrichtung (1) eine Lasereinrichtung (13) aufweist und die zu reinigenden Flächen der Backplatten (10) mit einem darauf gerichteten und die Flächen überstreichenden Laserstrahl gereinigt werden.

11. Verfahren zur Reinigung nach einem der vorangehenden Ansprüche 7 bis 10, **dadurch gekennzeichnet, dass** die Reinigungsvorrichtung (1) eine Trockeneisstrahlreinigungseinrichtung aufweist und die zu reinigenden Flächen der Backplatten (10) mit einem darauf gerichteten und die Flächen überstreichenden Trockeneisstrahl gereinigt werden.

## Claims

1. Cleaning device (1) for baking plates (10) of an automatic baking system (4), in which several baking presses (9, 11) that have two foldable baking plates (10) can be fastened spaced apart from one another to a circumferential baking press chain (8), which is arranged circumferentially in a housing (12), **characterized in that** the cleaning device (1) is designed such as to be docked onto the housing (12) of the automatic baking system (4) in a section of the circumferential baking press chain (8) that passes through in the closed state during the baking operation of the baking presses (9, 11) and comprises means for detachably fastening to the housing (7) of the automatic baking system (4), and **in that** the cleaning device (1) has an opening device for folding a baking press (9, 11).

2. Cleaning device (1) according to claim 1, **characterized in that** the cleaning device (1) can be docked onto an end (3) of the automatic baking system (4) in a region of a reversal of the baking press chain (8).

3. Cleaning device (1) according to claim 1 or claim 2, **characterized in that** the cleaning device (1) comprises a cleaning head (14), which can be moved relative to a surface (12) of a baking plate (10) to be cleaned.

4. Cleaning device (1) according to one of the preceding claims, **characterized in that** the cleaning device (1) comprises a laser device (13).

5. Cleaning device (1) according to one of the preceding claims, **characterized in that** the cleaning device (1) comprises a dry ice jet cleaning device.

6. Cleaning device (1) according to one of the preceding claims, **characterized in that** the cleaning device (1) comprises a shield housing (17).

7. Method for cleaning baking plates (10) of an automatic baking system (4) in which several baking presses (9, 11) that have two foldable baking plates (10) can be fastened spaced apart from one another to a circumferential baking press chain (8), which is arranged circumferentially in a housing (12), **characterized in that** a cleaning device (1) is designed such as to be docked onto the housing (12) of the automatic baking system (4) in a section of the circumferential baking press chain (8) that passes through in the closed state during the baking operation of the baking presses (9, 11) using means for detachably fastening to the housing (7) of the automatic baking system (4), and **in that** the individual baking presses (9, 11) are fed to the cleaning device (1) one after the other, opened with an opening device arranged on or in the cleaning device (1), cleaned and subsequently closed again with the opening device.

8. Method for cleaning according to claim 7, **characterized in that** the cleaning device (1) is docked onto an end (3) of the automatic baking system (4) in a region of a reversal of the baking press chain (8).

9. Method for cleaning according to one of the preceding claims 7 or 8, **characterized in that** the cleaning device (1) comprises a cleaning head (14), which is moved relative to a surface (12) of a baking plate (10) to be cleaned during the cleaning process.

10. Method for cleaning according to one of the preceding claims 7 to 9, **characterized in that** the cleaning device (1) comprises a laser device (13) and the surfaces of the baking plates (10) to be cleaned are cleaned with a laser jet directed to said plates and moving over the surfaces.

11. Method for cleaning according to one of the preceding claims 7 to 10, **characterized in that** the cleaning device (1) comprises a dry ice jet cleaning device and the surfaces of the baking plates (10) to be cleaned are cleaned with a dry ice jet directed to said plates and moving over the surfaces.

## Revendications

1. Dispositif de nettoyage (1) pour des plaques de cuisson (10) d'une installation de cuisson automatisée (4) dans laquelle une pluralité de pinces de cuisson (9, 11) munies de deux plaques de cuisson (10) pouvant s'ouvrir peuvent être fixées à distance les unes des autres sur une chaîne des pinces de cuisson circulaire (8) qui est agencée de manière à tourner dans une enceinte (12) **caractérisé en ce que** le dispositif de nettoyage (1) est réalisé de manière à tourner dans l'enceinte (12) de l'installation de cuisson automatisée (4) dans une partie de la chaine de pinces de cuisson (8) que les pinces de cuisson (9, 11) traversent à l'état fermé pendant le mode de cuisson et qu'il comporte des moyens pour se fixer de manière détachable à l'enceinte (7) de l'installation de cuisson automatisée (4) et que le dispositif de nettoyage (1) dispose d'un dispositif d'ouverture pour relever une pince de cuisson (9, 11).

2. Dispositif de nettoyage (1) selon la revendication 1, **caractérisé en ce que** le dispositif de nettoyage (1) peut être agencé dans une partie d'une déviation à une extrémité (3) de l'installation de cuisson automatisée (4).

3. Dispositif de nettoyage (1) selon l'une des revendications 1 ou 2, **caractérisé en ce que** le dispositif de nettoyage (1) présente une tête de nettoyage (14) qui est déplaçable par rapport à une surface (12) à nettoyer d'une plaque de cuisson (10).

4. Dispositif de nettoyage (1) selon l'une des revendications précédentes, **caractérisé en ce que** le dispositif de nettoyage (1) dispose d'un dispositif laser (13).

5. Dispositif de nettoyage (1) selon l'une des revendications précédentes, **caractérisé en ce que** le dispositif de nettoyage (1) dispose d'un dispositif de nettoyage à rayon de neige carbonique.

6. Dispositif de nettoyage (1) selon l'une des revendications précédentes, **caractérisé en ce que** le dispositif de nettoyage (1) dispose d'un boitier de blindage (17).

7. Procédé de nettoyage pour des plaques de cuisson (10) d'une installation de cuisson automatisée (4) dans laquelle une pluralité de pinces de cuisson (9, 11) munies de deux plaques de cuisson (10) pouvant s'ouvrir peuvent être fixées à distance les unes des autres sur une chaîne des pinces de cuisson circulaire (8) qui est agencée de manière à tourner dans une enceinte (12) au moyen des dispositifs pour se fixer de manière détachable à l'enceinte (7) de l'installation de cuisson automatisée (4) **caractérisé en ce que** un dispositif de nettoyage (1) est réalisé de manière à tourner dans l'enceinte (12) de l'installation de cuisson automatisée (4) et que les pinces de cuisson (9, 11) individuelles sont successivement délivrées au dispositif de nettoyage (1), et sont ouvertes, nettoyées et ensuite fermées par le dispositif d'ouverture qui est disposé au ou dans le dispositif de nettoyage.

8. Procédé de nettoyage selon la revendication 7, **caractérisé en ce que** le dispositif de nettoyage (1) est agencé dans une partie de déviation de la chaine des pinces de cuisson circulaire (8) de l'installation de cuisson automatisée (4).

9. Procédé de nettoyage selon l'une des revendications précédentes 7 ou 8, **caractérise en ce que** le dispositif de nettoyage (1) dispose d'une tête de nettoyage (14) qui est déplacé pendant le processus de nettoyage par rapport à une surface à nettoyer (12) d'une plaque de cuisson (10).

10. Procédé de nettoyage selon l'une des revendications précédentes 7 à 9, **caractérise en ce que** le dispositif de nettoyage (1) dispose d'un dispositif laser (13) et les surfaces à nettoyer des plaques de cuisson (10) sont nettoyés par un rayon laser orienté vers les surfaces et qui balaye les surfaces.

11. Procédé de nettoyage selon l'une des revendications précédentes 7 à 10, **caractérise en ce que** le dispositif de nettoyage (1) dispose d'un dispositif de nettoyage à rayon de neige carbonique et que les surfaces à nettoyer des plaques de cuisson (10) sont nettoyés par un rayon de neige carbonique orienté vers les surfaces et qui balaye les surfaces.
